# EUROPÄISCHE PATENTSCHRIFT

(11) **EP 0 336 291 B1**
(45) Veröffentlichungstag und Bekanntmachung des Hinweises auf die Patenterteilung: **20.01.1993**
(21) Anmeldenummer: 89105602.0
(22) Anmeldetag: 30.03.1989
(51) Int. Cl.: H02G 5/04, H01R 25/14, H02B 1/20

(54) **Halter mit Strom-Sammelschienen für ein Sammelschienensystem**
Bus bar support for a bus bar system
Support de barre conductrice pour un système de barre conductrice

(30) Priorität: 06.04.1988 DE 3811455
(43) Veröffentlichungstag der Anmeldung: 11.10.1989
(73) Patentinhaber: Rittal-Werk Rudolf Loh GmbH & Co. KG, 35745 Herborn (DE)
(72) Erfinder: Wagener, Hans, D-6344 Dietzhölztal-Rittershausen (DE)
(74) Vertreter: Vogel, Georg

(56) Entgegenhaltungen:
- DE-U- 7 435 327
- FR-A- 2 227 663
- US-A- 4 031 433

## Beschreibung

Die Erfindung betrifft einen Halter mit Strom-Sammelschienen für ein Sammelschienensystem, bestehend aus einem Isolierträger mit in seine Oberseite eingebrachten Aufnahmen für mehrere, in gleichmäßigen Abständen parallel zueinander darin festgelegte Strom-Sammelschienen-Abschnitte.

Ein Halter dieser Art ist durch die DE-PS 31 43 518 bekannt. Der Isolierträger ist dabei als schmales, quaderförmiges Befestigungsteil ausgebildet, das sich quer zu den Strom-Sammelschienen-Abschnitten erstreckt und diese im Abstand zur Befestigungsfläche festlegt. Die Strom-Sammelschienen-Abschnitte werden in ihrer Längsrichtung an mehreren, im Abstand zueinander stehenden Stellen mittels derartiger Halter auf der Befestigungsfläche festgelegt. Zwischen den quaderförmigen Haltern können elektrische Geräte direkt mit den Strom-Sammelschienen-Abschnitten verbunden werden. Dabei sind die Anschlußleitungen für die elektrischen Geräte ungeschützt zu den Anschlußkontakten der elektrischen Geräte geführt. Diese Verdrahtung hat zudem den Nachteil, daß die Anschlußleitungen nicht nur unsauber verlegt sind, sie können auch mit spannungsführenden Teilen des Sammelschienensystems in Verbindung kommen, die ein anderes Potential führen, so daß die Gefahr von Kurzschlüssen gegeben ist.

Es ist Aufgabe der Erfindung, einen Halter mit Strom-Sammelschienen der eingangs erwähnten Art zu schaffen, bei dem die auf die Strom-Sammelschienen-Abschnitte aufgesetzten elektrischen Geräte mit sauber und geschützt verlegten Anschlußleitungen verdrahtet werden können.

Diese Aufgabe wird nach der Erfindung dadurch gelöst, daß der Isolierträger als Trägerplatte ausgebildet ist, die sich über die Länge der in den Aufnahmen festgelegten Strom-Sammelschienen-Abschnitte erstreckt, daß mindestens zwischen benachbarten Strom-Sammelschienen-Abschnitten eine Reihe von von der Ober - zur Unterseite verlaufenden Durchbrüchen in die Trägerplatte eingebracht sind, die quer zu den Strom-Sammelschienen-Abschnitten aufeinander ausgerichtet sind, und daß in die Unterseite der Trägerplatte als Kabelkanäle dienende Aussparungen eingebracht sind, die jeweils die quer zu den Strom-Sammelschienen-Abschnitten aufeinander ausgerichteten Durchbrüche untereinander und mit den parallel zu den Strom-Sammelschienen-Abschnitten verlaufenden Längsseiten der Trägerplatte verbinden.

Bei dieser Ausgestaltung erstreckt sich der Halter mit seiner Trägerplatte über die gesamte Länge der Strom-Sammelschienen-Abschnitte und weist quer zur Längsrichtung ausgerichtet Kabelkanäle auf, die im Bereich der Durchbrüche auf die Oberseite der Trägerplatte geführt sind. Die Anschlußleitungen können daher gezielt, je nach Befestigungsart des elektrischen Gerätes, an der richtigen Stelle der Trägerplatte in einen Kabelkanal eingeführt und im Bereich des Strom-Sammelschienen-Abschnittes durch einen Durchbruch hochgeführt werden, so daß sie auf kurzem Weg mit den Anschlußkontakten des elektrischen Gerätes verbunden werden können. Die Anschlußleitungen werden dabei durch die Trägerplatte geschützt geführt und können mit anderen, spannungsführenden Teilen des Sammelschienensystems nicht in Berührung kommen. Außerdem ist die Verdrahtung der elektrischen Geräte optisch schöner.

Nach einer Ausgestaltung ist vorgesehen, daß die Durchbrüche als Bohrungen ausgebildet sind, die in Längsrichtung der Strom-Sammelschienen-Abschnitte in regelmäßigen Abständen zueinander angeordnet sind, oder daß die Durchbrüche als Langlöcher ausgebildet sind, die mit ihren größeren Abmessungen in die Längsrichtung der Strom-Sammelschienen-Abschnitte ausgerichtet und in regelmäßigen Abständen zueinander angeordnet sind.

Ausreichend Platz für Anschlußleitungen in diesen Kabelkanälen wird dadurch geschaffen, daß sich die Aussparungen über einen Teil der Dicke der Trägerplatte erstrecken, der etwa einem Drittel bis zur Hälfte der Dicke der Trägerplatte entspricht.

Die Festlegung der Strom-Sammelschienen-Abschnitte auf der Trägerplatte erfolgt nach einer Ausgestaltung dadurch, daß die Strom-Sammelschienen-Abschnitte mit der Trägerplatte verschraubt sind. Dabei ist vorteilhafterweise vorgesehen, daß die Schraubstellen der Strom-Sammelschienen-Abschnitte in Längsrichtung in gleichen Abständen zueinander angeordnet und quer zu den Strom-Sammelschienen-Abschnitten aufeinander ausgerichtet sind, um einheitlich ausgebildete Strom-Sammelschienen-Abschnitte verwenden zu können.

Der Raum für die Kabelkanäle läßt sich dadurch vergrößern, daß die Unterseite der Trägerplatte im Bereich der Schraubstellen quer zu den Strom-Sammelschienen-Abschnitten verlaufende Stege aufweist, die in einer gemeinsamen Befestigungsebene der Trägerplatte enden und im Bereich der Schraubstellen zylinderförmige Erweiterungen aufweisen. Dann ist vorgesehen, daß sich die als Langlöcher ausgebildeten Durchbrüche der Trägerplatte jeweils über den zwischen benachbarten Stegen liegenden Bereich der Trägerplatte erstrecken, um auch die Anschlußleitungen über die ganze Breite der Kabelkanäle auf die Oberseite der Trägerplatte führen zu können.

Der Anschluß der elektrischen Geräte an den Strom-Sammelschienen-Abschnitte läßt sich dann leicht ausführen, wenn die Ausgestaltung so vorgenommen ist, daß die Strom-Sammelschienen-Abschnitte Z-förmigen Querschnitt aufweisen und mit jeweils einem Querschenkel in die Aufnahmen der Trägerplatte eingeführt und mit diesen verschraubt sind, und daß die anderen Querschenkel der Z-förmigen Strom-Sammelschienen-Abschnitte als Anschlußschenkel in einem Abstand parallel zur Oberseite der Trägerplatte verlaufend angeordnet sind.

Das Sammelschienensystem läßt sich dadurch leicht erweitern, daß die Aufnahmen im Bereich der quer zu den Strom-Sammelschienen-Abschnitte verlaufenden Schmalseiten der Trägerplatte in erweiterte Anschlußaufnahmen für Verbindungselemente übergehen, die die Strom-Sammelschienen-Abschnitte aneinandergereihter Trägerplatten elektrisch leitend miteinander verbinden, sowie daß die Trägerplatte winkelförmig mit zwei senkrecht zueinander stehenden Trägerplattenabschnitten ausgebildet ist und winkelförmige Strom-Sammelschienen-Abschnitte aufnimmt, und daß in beiden Trägerplattenabschnitten die Aussparungen senkrecht zu den darin festgelegten Teilabschnitten der winkelförmigen Strom-Sammelschienen-Abschnitte verlaufen.

Die winkelförmige Trägerplatte kann nach einer weiteren Ausgestaltung aus zwei Teilträgerplatten zusammengesetzt sein, wobei die einander zugekehrten Schmalseiten in sich ergänzenden Winkeln von 45° zur Längsrichtung der Teilabschnitte der Strom-Sammelschienen-Abschnitte stehen.

Zur Befestigung des Halters auf der Befestigungsfläche ist vorgesehen, daß die Trägerplatte außerhalb der Aussparungen mit Befestigungsaufnahmen für Befestigungsmittel, wie Befestigungsschrauben oder dgl., versehen ist.

Die Erfindung wird anhand von in den Zeichnungen dargestellten Ausführungsbeispielen näher erläutert. Es zeigt:
Fig. 1 in Draufsicht den aus der Trägerplatte und den Strom-Sammelschienen-Abschnitten bestehenden Halter mit Strom-Sammelschienen,
Fig. 2 einen Querschnitt durch den Halter mit Strom-Sammelschienen entlang der Linie II-II der Fig. 1,
Fig. 3 in Draufsicht einen winkelförmigen Halter mit Stromsammelschienen mit zwei Teilträgerplatten und winkelförmigen Strom-Sammelschienen-Abschnitten und
Fig. 4 in Draufsicht ein anderes Ausführungsbeispiel eines Halters mit Strom-Sammelschienen.

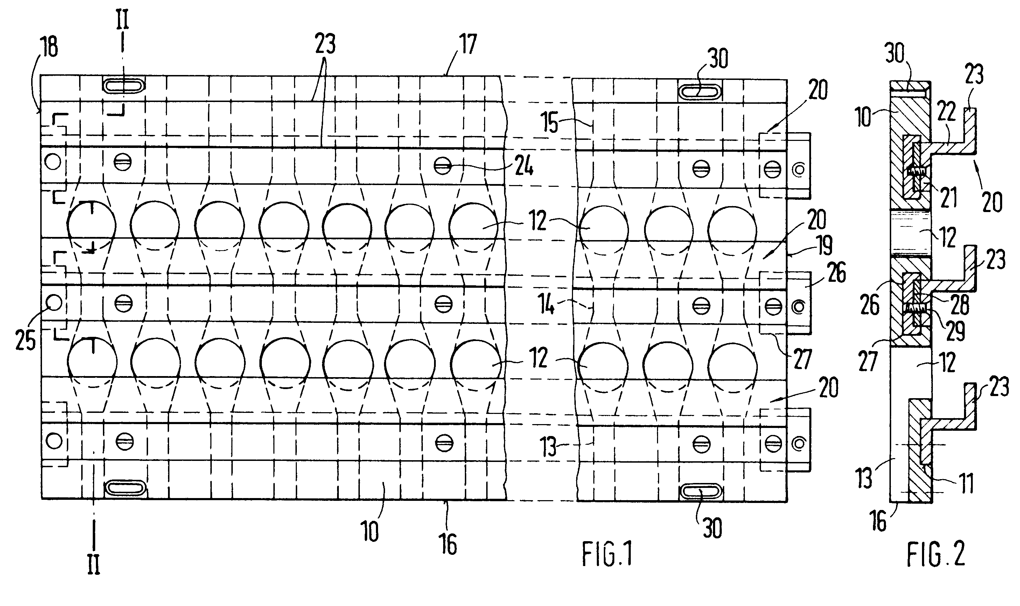

Das Ausführungsbeispiel nach den Fig. 1 und 2 zeigt einen Halter mit Strom-Sammelschienen, der als Isolierträger die Trägerplatte 10 aufweist, die mit ihren Längsseiten 16 und 17 und ihren Schmalseiten 18 und 19 eine rechteckförmige Form aufweist. In die Oberseite der Trägerplatte 10 sind in gleichmäßigem Abstand drei Aufnahmen 11 für drei identische Strom-Sammelschienen-Abschnitte 20 eingebracht. Die Strom-Sammelschienen-Abschnitte 20 haben Z-förmigen Querschnitt, wobei ein Querschenkel 21 in regelmäßigen Abständen mit der Trägerplatte 10 verschraubt ist, wie die Schraubstellen 24 zeigen. Der andere Querschenkel 23, der über den Mittelschenkel 22 zu der Trägerplatte 10 in einem vorgegebenen Abstand steht, dient als Anschlußschenkel, auf den die elektrischen Geräte aufgesetzt werden. Dabei wird die elektrische Verbindung zwischen dem Strom-Sammelschienen-Abschnitt 20 und dem elektrischen Gerät hergestellt.

Die Aufnahmen 11 in der Oberseite der Trägerplatte 10 sind im Querschnitt an den Querschnitt der Querschenkel 21 der Strom-Sammelschienen-Abschnitte 20 angepaßt, so daß diese mit der Oberseite bündig abschließen. Zwischen dem unteren Strom-Sammelschienen-Abschnitt 20 und dem mittleren Strom-Sammelschienen-Abschnitt sowie zwischen dem mittleren Strom-Sammelschienen-Abschnitt 20 und dem oberen Strom-Sammelschienen-Abschnitt 20 ist jeweils eine Reihe von Durchbrüchen 12 in die Trägerplatte 10 eingebracht. Diese Durchbrüche 12 sind im Ausführungsbeispiel als Bohrungen ausgebildet, die in Längsrichtung der Strom-Sammelschienen-Abschnitte 20 und der Trägerplatte 10 in regelmäßigen Abständen angeordnet sind.

Quer zu den Strom-Sammelschienen-Abschnitten 20 sind die Durchbrüche 12 aufeinander ausgerichtet. In die Unterseite der Trägerplatte 10, die die Befestigungsseite der Trägerplatte 10 bildet, sind nutförmige Aussparungen 13, 14 und 15 eingebracht, die sich etwa über ein Drittel bis zur Hälfte der Dicke der Trägerplatte 10 erstrecken. Diese Aussparungen 13, 14 und 15 bilden Kabelkanäle, die die Durchbrüche 12 mit den Längsseiten 16 und 17 der Trägerplatte 10 verbinden. Die quer zu den Strom-Sammelschienen-Abschnitten 20 verlaufenden Aussparungen 13, 14 und 15 bilden für die aufeinander ausgerichteten Durchbrüche 12 quer zu den Strom-Sammelschienen-Abschnitten 20 verlaufende Kabelkanäle, die auch mit den zugeordneten Durchbrüchen 12 in Verbindung stehen. Eine Anschlußleitung kann an der Längsseite 16 eingeführt und über die Aussparung 13 bzw. die Aussparungen 13 und 14 mit in den einen oder anderen Durchbruch 12 eingeführt und aus diesem herausgeführt werden. Die Anschlußleitung kann aber auch an der Längsseite 17 eingeführt und über die Aussparung 15 bzw. die Aussparungen 15 und 14 in den einen oder anderen Durchbruch 12 eingeführt und aus diesem herausgeführt werden. Die Trägerplatte 10 deckt dabei die Anschlußleitungen ab und verhindert einen Kontakt mit stromführenden Teilen. Zur Befestigung der Trägerplatte 10 sind in den Randbereichen der Längsseiten 16 und 17 Befestigungsaufnahmen 30 für Befestigungsmittel wie Befestigungsschrauben,eingebracht.

An den Schmalseiten 19 und 20 schließen die Strom-Sammelschienen-Abschnitte 20 bündig mit der Trägerplatte 10 ab. Die Aufnahmen 11 laufen im Bereich der Schmalseiten in erweiterte Anschlußaufnahmen 27 für plattenförmige Verbinderkontakte 26 aus, die bei der Aneinanderreihung von Haltern mit Strom-Sammelschienen zur elektrischen Drehschaltung der Strom-Sammelschienen-Abschnitte 20 dienen. Die Strom-Sammelschienen-Abschnitte 20 tragen im Bereich der Anschlußaufnahmen 27 Befestigungsbohrungen 25 für Befestigungsschrauben 29, die in die Verbindungselemente 26 und 28 eingeschraubt werden. Dabei kann das zweiteilige Verbindungselement aus einem Isolierteil und einem Kontaktteil zusammengesetzt sein, wie dem Schnitt nach Fig. 2 zu entnehmen ist. Die Verbindungselemente 26 und 28 ragen zur Hälfte in die Anschlußaufnahme 27, so daß zwei Trägerplatten 10 aufeinanderstoßend aneinandergereiht werden können.

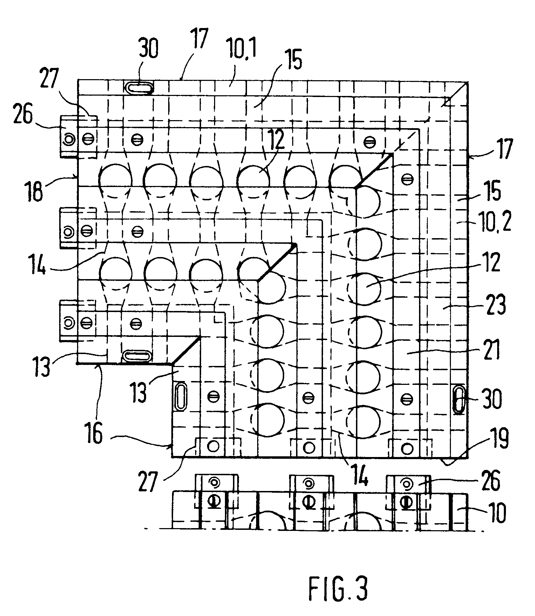

Wie das Ausführungsbeispiel nach Fig. 3 zeigt, kann die Trägerplatte auch winkelförmig ausgebildet und aus zwei Teilträgerplatten 10.1 und 10.2 zusammengesetzt sein, die im Bereich ihrer Stoßstelle im Winkel von 45° zu den Teilabschnitten der winkelförmigen Strom-Sammelschienen-Abschnitte 20 stehen und sich zu einer Gehrungsverbindung ergänzen. Die Teilträgerplatten 10.1 und 10.2 können auch einstückig zusammengefaßt sein. Die Durchbrüche 12 sind wieder jeweils zwischen die benachbarten Strom-Sammelschienen-Abschnitte 20 eingebracht und die Aussparungen 13,14 und 15 stehen zu den als Außenkanten des winkelförmigen Halters dienenden Längsseiten 16 und 17 der Teilträgerplatten 10.1 und 10.2 und damit zu den Teilabschnitten der winkelförmigen Strom-Sammelschienen-Abschnitten 20 senkrecht. Die Schmalseiten 18 und 19 des winkelförmigen Halters stehen dann senkrecht zueinander und sind für die Anreihung eines weiteren Halters mit einer Trägerplatte 10 ausgelegt.

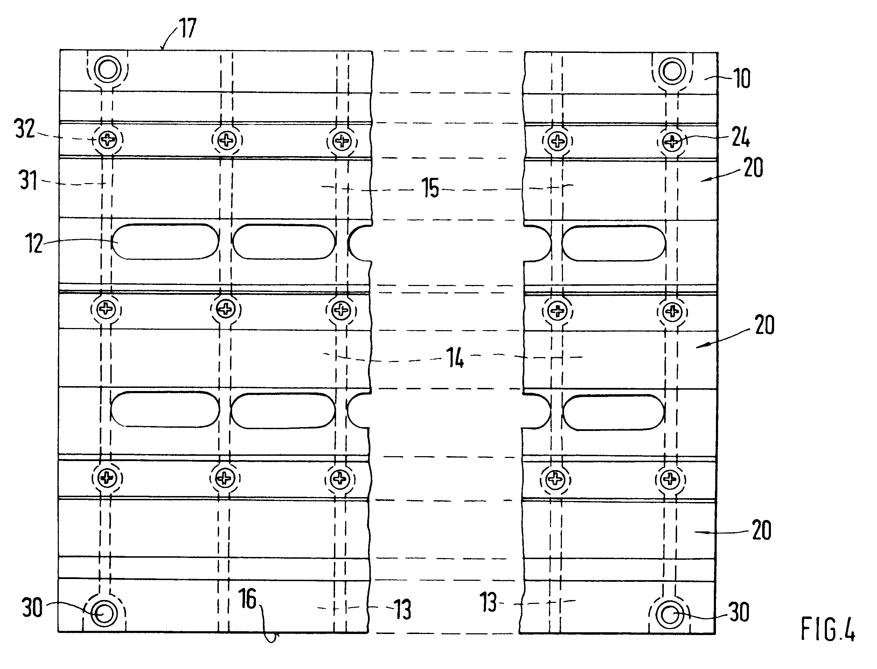

Das Ausführungsbeispiel nach Fig. 4 unterscheidet sich in der Ausbildung der Durchbrüche 12 und der Aussparungen 13, 14 und 15. Auf der Unterseite der Trägerplatte 10 sind quer zu den Strom-Sammelschienen-Abschnitten 20 verlaufende Stege 31 angeformt, die in einer gemeinsamen Befestigungsebene enden. Diese Stege 31 verbinden die aufeinander ausgerichteten Schraubstellen 24 und sind in diesen Bereichen mit zylinderförmigen Erweiterungen 32 versehen. Die Aussparungen 13, 14 und 15 erstrecken sich daher jeweils zwischen benachbarten Stegen 31, die wie die Schraubstellen 24 in Längsrichtung der Strom-Sammelschienen-Abschnitte 20 in gleichmäßigen Abständen angeordnet sind. Die Durchbrüche 12 sind als Langlöcher ausgebildet, die mit ihren größeren Abmessungen von Steg 31 zu Steg 31 reichen. Der Zugang für die Anschlußleitungen erfolgt an den Längsseiten 16 und 17 über die Aussparungen 13 und 15.

## Patentansprüche

1. Halter mit Strom-Sammelschienen für ein Sammelschienensystem, bestehend aus einem Isolierträger mit in seine Oberseite eingebrachten Aufnahmen 11 für mehrere, in gleichmäßigen Abständen parallel zueinander darin festgelegte Strom-Sammelschienen-Abschnitte (20),
dadurch gekennzeichnet,
daß der Isolierträger als Trägerplatte (10, 10.1, 10.2) ausgebildet ist, die sich über die Länge der in den Aufnahmen (11) festgelegten Strom-Sammelschienen-Abschnitte (20) erstreckt,
daß mindestens zwischen benachbarten Strom-Sammelschienen-Abschnitten (20) eine Reihe von von der Ober - zur Unterseite verlaufenden Durchbrüchen (12) in die Trägerplatte (10, 10.1, 10.2) eingebracht sind, die quer zu den Strom-Sammelschienen-Abschnitten (20) aufeinander ausgerichtet sind, und
daß in die Unterseite der Trägerplatte (10, 10.1, 10.2) als Kabelkanäle dienende Aussparungen (13,14,15) eingebracht sind, die jeweils die quer zu den Strom-Sammelschienen-Abschnitten (20) aufeinander ausgerichteten Durchbrüche (12) untereinander und mit den parallel zu den Strom-Sammelschienen-Abschnitten (20) verlaufenden Längsseiten (16,17) der Trägerplatte (10, 10.1, 10.2) verbinden.

2. Halter nach Anspruch 1,
dadurch gekennzeichnet,
daß die Durchbrüche (12) als Bohrungen ausgebildet sind, die in Längsrichtung der Strom-Sammelschienen-Abschnitte (20) in regelmäßigen Abständen zueinander angeordnet sind.

3. Halter nach Anspruch 1,
dadurch gekennzeichnet,
daß die Durchbrüche (12) als Langlöcher ausgebildet sind, die mit ihren größeren Abmessungen in die Längsrichtung der Strom-Sammelschienen-Abschnitte (20) ausgerichtet und in regelmäßigen Abständen zueinander angeordnet sind.

4. Halter nach einem der Ansprüche 1 bis 3,
dadurch gekennzeichnet,
daß sich die Aussparungen (13,14,15) über einen Teil der Dicke der Trägerplatte (10, 10.1, 10.2) erstrecken, der etwa einem Drittel bis zur Hälfte der Dicke der Trägerplatte (10, 10.1, 10.2) entspricht.

5. Halter nach einem der Ansprüche 1 bis 4,
dadurch gekennzeichnet,
daß die Strom-Sammelschienen-Abschnitte (20) mit der Trägerplatte (10, 10.1, 10.2) verschraubt sind.

6. Halter nach einem der Ansprüche 1 bis 5,
dadurch gekennzeichnet,
daß die Schraubstellen (24) der Strom-Sammelschienen-Abschnitte (20) in Längsrichtung in gleichen Abständen zueinander angeordnet und quer zu den Strom-Sammelschienen-Abschnitten (20) aufeinander ausgerichtet sind.

7. Halter nach einem der Ansprüche 1 bis 6,
dadurch gekennzeichnet,
daß die Unterseite der Trägerplatte (10, 10.1, 10.2) im Bereich der Schraubstellen (24) quer zu den Strom-Sammelschienen-Abschnitten (20) verlaufende Stege (31) aufweist, die in einer gemeinsamen Befestigungsebene der Trägerplatte (10, 10.1, 10.2) enden und im Bereich der Schraubstellen (24) zylinderförmige Erweiterungen (32) aufweisen.

8. Halter nach Anspruch 7,
dadurch gekennzeichnet,
daß sich die als Langlöcher ausgebildeten Durchbrüche (12) der Trägerplatte (10, 10.1, 10.2) jeweils über den zwischen benachbarten Stegen (31) liegenden Bereich der Trägerplatte (10, 10.1, 10.2) erstrecken.

9. Halter nach einem der Ansprüche 1 bis 8,
dadurch gekennzeichnet,
daß die Strom-Sammelschienen-Abschnitte (20) Z-förmigen Querschnitt aufweisen und mit jeweils einem Querschenkel (21) in die Aufnahmen (11) der Trägerplatte (10, 10.1, 10.2) eingeführt und mit diesen verschraubt sind, und daß die anderen Querschenkel (23) der Z-förmigen Strom-Sammelschienen-Abschnitte (20) als Anschlußschenkel in einem Abstand parallel zur Oberseite der Trägerplatte (10, 10.1, 10.2) verlaufend angeordnet sind.

10. Halter nach einem der Ansprüche 1 bis 9,
dadurch gekennzeichnet,
daß die Aufnahmen (11) im Bereich der quer zu den Strom-Sammelschienen-Abschnitte (20) verlaufenden Schmalseiten (18,19) der Trägerplatte (10, 10.1, 10.2) in erweiterte Anschlußaufnahmen (27) für Verbindungselemente (26,28) übergehen, die die Strom-Sammelschienen-Abschnitte (20) aneinandergereihter Trägerplatten (10, 10.1, 10.2) elektrisch leitend miteinander verbinden.

11. Halter nach einem der Ansprüche 1 bis 10,
dadurch gekennzeichnet,
daß die Trägerplatte (10) winkelförmig mit zwei senkrecht zueinander stehenden Trägerplattenabschnitten ausgebildet ist und winkelförmige Strom-Sammelschienen-Abschnitte (20) aufnimmt, und
daß in beiden Trägerplattenabschnitten die Aussparungen (13,14,15) senkrecht zu den darin festgelegten Teilabschnitten der winkelförmigen Strom-Sammelschienen-Abschnitte (20) verlaufen.

12. Halter nach Anspruch 11,
dadurch gekennzeichnet,
daß die winkelförmige Trägerplatte aus zwei Teilträgerplatten (10.1, 10.2) zusammengesetzt ist, wobei die einander zugekehrten Schmalseiten in sich ergänzenden Winkeln von 45° zur Längsrichtung der Teilabschnitte der Strom-Sammelschienen-Abschnitte (20) stehen.

13. Halter nach einem der Ansprüche 1 bis 12,
dadurch gekennzeichnet,
daß die Trägerplatte (10, 10.1, 10.2) außerhalb der Aussparungen (13,14,15) mit Befestigungsaufnahmen (30) für Befestigungsmittel, wie Befestigungsschrauben oder dgl., versehen ist.

## Claims

1. Bus bar support for a bus bar system comprising an insulating bracket with locations (11) on its top for several equidistant parallel bus bar sections (20),
characterized thereby,
that the insulating bracket is shaped as supporting plate (10, 10.1, 10.2) extending over the length of the bus bar sections (20) hold in the locations (11),
that at least between the neighbouring bus bar sections (20) a row of perforations (12) is provided in the supporting plate (10, 10.1, 10.2) orientated transversely to the bus bar sections (20), and
that the lower side of the supporting plate (10, 10.1, 10.2) is provided with recesses (13, 14, 15) serving as cable channels which link the recesses (12) transversely orientated to the bus bar sections with each other and the sides (16,17) of the supporting plate (10, 10.1, 10.2) parallel to the bus bar sections (20).

2. Support according to claim 1,
characterized thereby,
that the perforations (12) are shaped as equidistant bores located in the longitudinal direction of the bus bar sections (20).

3. Support according to claim 1,
characterized thereby,
that the perforations (12) are shaped as long holes which, with their large dimensions, are orientated alongside the bus bar sections (20) and equidistant.

4. Support according to one of the claims 1 to 3,
characterized thereby,
that the recesses (13,14,15) extend over the partial thickness of the supporting plate (10, 10.1, 10.2) which corresponds to approx. the third to a half of the supporting-plate thickness (10, 10.1, 10.2).

5. Support according to one of the claims 1 to 4,
characterized thereby,
that the bus bar sections (20) are screwed with the supporting plate (10, 10.1, 10.2).

6. Support according to one of the claims 1 to 5,
characterized thereby,
that the screwed points (24) of the bus bar sections (20) are longitudinally equidistant and transversely orientated relative to the bus bar sections (20).

7. Support according to one of the claims 1 to 6,
characterized thereby,
that the lower side of the supporting plate (10, 10.1, 10.2) in the area of the screwed points (24) is provided with webs (31) transversely located relative to the bus bar sections (20) which end in a common fixation plane of the supporting plate (10, 10.1, 10.2) and are provided with cylindrical extensions (32) in the screwed points area (24).

8. Support according to claim 7,
characterized thereby,
that the perforations (12) shaped as long holes of the supporting plate (10, 10.1, 10.2) extend to the area between neighbouring webs (31) of the supporting plate (10, 10.1, 10.2).

9. Support according to one of the claims 1 to 8,
characterized thereby,
that the bus bar sections (20) have a Z-shaped section and are introduced with one leg (21) into the locations (11) of the supporting plate (10, 10.1, 10.2) and screwed with them and
that the other legs (23) of the Z-shaped bus bar sections (20) as connecting legs are located parallel to the upper side of the supporting plate (10, 10.1, 10.2).

10. Support according to one of the claims 1 to 9,
characterized thereby,
that in the area of the narrow sides (18, 19) of the supporting plate (10, 10.1, 10.2) transversal to the bus bar sections, the locations (11) have extended transitions (27) for fastening elements (26,28) which offer a conductive link to bus bar sections (20) of contiguous supporting plates (10, 10.1, 10.2).

11. Support according to one of the claims 1 to 10,
characterized thereby,
that the supporting plate (10) is angular shaped with two vertical supporting plate sections and receives angular bus bar sections (20), and
that in both supporting plate sections the recesses (13,14,15) are vertical relative to the partial sections of the angular bus bar sections (20) fixed within them.

12. Support according to claim 11,
characterized thereby,
that the angular supporting plate comprises two partial supporting plates (10.1, 10.2) whereby the adjacent narrow sides are located at angles of 45° completing one another relative to the longitudinal direction of the partial sections of the bus bar sections (20).

13. Support according to one of the claims 1 to 12,
characterized thereby,
that the supporting plate (10, 10.1, 10.2) besides the recesses (13,14,15) is provided with fastening locations (30) for fastening elements such as screws or similar.

## Revendications

1. Support de barre conductrice pour un système de barre conductrice comprenant un support isolant muni de son côté supérieur de logements (11) pour plusieurs sections de barre conductrice (20) fixées dans ledit support, disposées parallèllement et à une distance régulière,
caractérisé en ce que
le support isolant sert de plaque d'appui (10, 10.1, 10.2) qui s'étend sur la longueur des sections de barre conductrice (20) fixées dans les logements (11),
qu'au moins entre les sections de barre conductrice avoisinantes (20) une rangée de percements (12) est prévue dans la plaque d'appui (10, 10.1, 10.2) orientés en travers par rapport aux sections de barre conductrice (20) et
que le côté inférieur de la plaque d'appui (10, 10.1, 10.2) comprend des évidements (13,14,15) servant de caniveaux de câbles qui relient les percements (12) orientés en travers des sections de barre conductrice (20) et les longs côtés (16,17) de la plaque d'appui (10, 10.1, 10.2) parallèls aux sections de barre conductrice (20).

2. Support selon la revendication 1,
caractérisé en ce que
lesdits percements (12) sont des alésages disposés à distance régulière le long des sections de barre conductrice (20).

3. Support selon la revendication 1,
caractérisé en ce que
les percements (12) sont formés comme des trous ovales qui avec ses grandes dimensions, sont orientés longitudinalement par rapport aux sections de barre conductrice (20) et disposés à distances regulières l'un à l'autre.

4. Support selon l'une des revendications de 1 à 3,
caractérisé en ce que
les évidements (13,14,15) s'étendent sur une partie de l'épaisseur de la plaque d'appui (10, 10.1, 10.2) correspondante env. à un tiers jusqu'à la moitié de l'épaisseur de la plaque d'appui (10, 10.1, 10.2).

5. Support selon l'une des revendications de 1 à 4,
caractérisé en ce que
les sections de barre conductrice (20) sont vissées à la plaque d'appui (10, 10.1, 10.2).

6. Support selon l'une des revendications de 1 à 5,
caractérisé en ce que
les raccords vissés (24) des sections de barre conductrice (20) sont équidistants en longueur et orientés en travers aux sections de barre conductrice (20).

7. Support selon l'une des revendications de 1 à 6,
caractérisé en ce que
le côté inférieur de la plaque d'appui (10, 10.1, 10.2) est muni de nervures (31) dans la zone des raccords vissés (24) qui sont orientées en travers par rapport aux sections de barre conductrice (20) allant jusqu'à un plan commun de fixation de la plaque d'appui (10, 10.1, 10.2) et étant munies d'extensions cylindriques (32) dans la zone des raccords vissés (24).

8. Support selon la revendication 7,
caractérisé en ce que
les percements (12) sous forme de trous ovales (12) de la plaque d'appui (10, 10.1, 10.2) s'étendent sur la zone de la plaque d'appui (10, 10.1, 10.2) entre les nervures avoisinantes (31).

9. Support selon l'une des revendications de 1 à 8,
caractérisé en ce que
les sections de barre conductrice (20) sont d'une section en Z et sont introduites, avec au moins un côté (21), dans les logements (11) de la plaque d'appui (10, 10.1, 10.2) et y vissées avec lesdits logements et que
les autres côtés (23) des sections de barre conductrice en Z (20) sont placés parallèlement au côté supérieur de la. plaque d'appui (10, 10.1, 10.2) en tant que côtés de raccordement.

10. Support selon l'une des revendications de 1 à 9,
caractérisé en ce que
dans la zone des côtés étroits (18,19) de la plaque d'appui (10, 10.1, 10.2) logés en travers aux sections de barre conductrice (20) les logements (11) passent en extensions de raccordement (27) destinées aux organes de raccordement (26,28) offrant une connexion conductible aux sections de barre conductrice (20) de plaques d'appui (10, 10.1, 10.2) jointes l'une à l'autre.

11. Support selon l'une des revendications de 1 à 10,
caractérisé en ce que
la plaque d'appui (10) est angulaire avec deux sections verticales et recoit des sections de barre conductrice angulaires (20), et eue
dans les deux sections de la plaque d'appui les évidements (13,14,15) sont verticaux par rapport aux sections partielles des sections angulaires de la barre conductrice (20) fixées dans lesdits évidements.

12. Support selon la revendication 11,
caractérisé en ce que
la plaque d'appui angulaire comprend deux plaques d'appui partielles (10.1, 10.2) où les côtés étroits adjacents prennent appui sur des cornières de 45° par rapport au sens longitudinal des sections partielles des sections de barres conductrice (20).

13. Support selon l'une des revendications de 1 à 12,
caractérisé en ce qu'
en dehors des évidements (13,14,15) la plaque d'appui (10, 10.1, 10.2) est équipée de logements de fixation (30) pour des organes de fixation tels que vis ou similaire.
